# EUROPÄISCHE PATENTSCHRIFT

(11) **EP 2 953 815 B1**
(45) Veröffentlichungstag und Bekanntmachung des Hinweises auf die Patenterteilung: **24.04.2019**
(21) Anmeldenummer: 14702853.4
(22) Anmeldetag: 05.02.2014
(51) Int. Cl.: B60N 2/80, B29C 44/12

(54) **KOPFSTÜTZE FÜR EIN FAHRZEUG UND VERFAHREN ZU DEREN HERSTELLUNG**
HEADREST FOR A VEHICLE AND A METHOD OF PRODUCING THE SAME
APPUI-TÊTE DE VÉHICULE ET PROCÉDÉ POUR SA PRODUCTION

(30) Priorität: 05.02.2013 DE 102013201813
(43) Veröffentlichungstag der Anmeldung: 16.12.2015
(73) Patentinhaber: Adient Luxembourg Holding S.à r.l., 1855 Luxembourg (LU)
(72) Erfinder: NAVARRO, Daniel, F-67500 Haguenau (FR); GENTIL, Sebastien, F-67000 Strasbourg (FR); LANG, Nathalie, F-67130 Wisches (FR)
(74) Vertreter: Finger, Catrin
(86) Internationale Anmeldenummer: PCT/EP2014/052241
(87) Internationale Veröffentlichungsnummer: WO 2014/122170

(56) Entgegenhaltungen:
- GB-A- 2 315 703
- US-A1- 2004 256 904
- US-A1- 2009 167 069

## Beschreibung

Die Erfindung betrifft eine Kopfstütze für ein Fahrzeug gemäß dem Oberbegriff des Anspruchs 1.

Die Erfindung betrifft weiterhin ein Verfahren zur Herstellung einer Kopfstütze gemäß dem Oberbegriff des Anspruchs 8.

Aus dem Stand der Technik sind allgemein Kopfstützen für Fahrzeuge bekannt, bei welchen zwischen einem äußeren Bezug und einem inneren Verbindungsteil zur Anbindung der Kopfstütze an eine Kopfstützenhalterung ein Füllmaterial in Form eines Schaums angeordnet ist. Bei bekannten Kopfstützen ist es dabei beispielsweise vorgesehen, dass ein vorgeformter Schaumkörper zur Füllung des Kopfstützenkörpers verwendet wird.

Eine derartige Kopfstütze für ein Fahrzeug offenbart die DE 10 2005 015 292 B3. Die Kopfstütze umfasst einen Kopfstützenkörper und eine Kopfstützenhalterung, wobei an der Außenseite des Kopfstützenkörpers ein Bezug vorgesehen ist. Innerhalb des Kopfstützenkörpers ist ein Verbindungsteil zur Verbindung der Kopfstützenhalterung mit dem Kopfstützenkörper vorgesehen, wobei zwischen dem Verbindungsteil und dem Bezug ein aus Schaum gebildetes Füllmaterial angeordnet ist. Das Füllmaterial ist in seinem Verarbeitungszustand flüssig ausgebildet, wobei bezüglich des Füllmaterials in seinem Verarbeitungszustand das Verbindungsteil und der Bezug einen im Wesentlichen dichten Raumbereich definieren. Weiterhin wird ein Verfahren zur Herstellung der Kopfstütze beschrieben.

Auch die FR 2 890 890 A1 beschreibt eine derartige Kopfstütze für ein Fahrzeug, wobei zwischen einem innerhalb eines Kopfstützenkörpers angeordneten Verbindungsteil und einem an der Außenseite des Kopfstützenkörpers angeordneten Bezug ein aus einem synthetischen Schaumstoff gebildetes Polsterelement angeordnet ist.

Aus der DE 197 02 995 A1 ist ein energieabsorbierender und zu einer Verwendung in Kopfstützen in Kraftfahrzeugen vorgesehener Formkörper, bestehend aus zwei Schaumstoffschichten mit unterschiedlichen Dichten und unterschiedlichen elastischen Verformbarkeiten, bekannt. Die beiden Schaumstoffschichten sind in Kraftangriffsrichtung hintereinander angeordnet.

Die DE 30 22 551 A1 beschreibt eine Kopfstütze für ein Kraftfahrzeug, welche aus einem eine metallische Befestigungseinlage umfassenden Schaumstoffkörper besteht. Der Schaumstoffkörper besteht aus zwei getrennt gefertigten, ringförmigen Teilen, welche aus unterschiedlichen Materialien mit unterschiedlicher Eindruckhärte bestehen.

Ferner beschreiben die US 2004/0256904 A1 und die GB 2 315 703 A jeweils eine Kopfstütze für ein Fahrzeug mit einem Kopfstützenkörper, einer Kopfstützenhalterung und einem an einer Außenseite des Kopfstützenkörpers vorgesehenen Bezug, wobei innerhalb des Kopfstützenkörpers ein Verbindungsteil zur Verbindung der Kopfstützenhalterung mit dem Kopfstützenkörper vorgesehen ist. Weiterhin wird jeweils ein Verfahren zur Herstellung einer Kopfstütze beschrieben.

Der vorliegenden Erfindung liegt die Aufgabe zugrunde, eine gegenüber dem Stand der Technik verbesserte Kopfstütze für ein Fahrzeug und ein verbessertes Verfahren zur Herstellung einer solchen Kopfstütze anzugeben.

Hinsichtlich der Kopfstütze wird die Aufgabe erfindungsgemäß durch die im Anspruch 1 angegebenen Merkmale und hinsichtlich des Verfahrens durch die im Anspruch 8 angegebenen Merkmale gelöst.

Vorteilhafte Ausgestaltungen der Erfindung sind Gegenstand der Unteransprüche.

Die Kopfstütze für ein Fahrzeug umfasst einen Kopfstützenkörper, eine Kopfstützenhalterung und einen an einer Außenseite des Kopfstützenkörpers vorgesehenen Bezug, wobei innerhalb des Kopfstützenkörpers ein Verbindungsteil zur Verbindung der Kopfstützenhalterung mit dem Kopfstützenkörper vorgesehen ist. Dabei ist das Verbindungsteil aus einem innerhalb des Bezuges in einem "Am-Ort-Schäumungsverfahren" bzw. "Pour-in-place-Verfahren" erzeugten ersten Schaummaterial gebildet, wobei in einem zur Abstützung eines Insassenkopfes vorgesehenen Stützbereich zwischen dem Verbindungsteil und dem Bezug an einer Innenseite des Bezuges ein Stützelement, welches aus einem zweiten Schaummaterial gebildet ist, befestigt ist. Erfindungsgemäß weist das Stützelement mehrere im Wesentlichen parallel zueinander und zum Stützbereich verlaufende Schichten auf. In einer möglichen Ausführungsform weist das erste Schaummaterial eine größere Festigkeit und/oder Härte, insbesondere eine größere Druckfestigkeit und/oder Stauchhärte und eine größere Eindruckhärte, als das zweite Schaummaterial auf.

Die erfindungsgemäße Kopfstütze zeichnet sich aufgrund der Ausbildung des Verbindungsteils als Schaumelement in besonders vorteilhafter Weise durch eine geringe Masse bei gleichzeitig hoher mechanischer Stabilität und einer besonders guten Rückhaltewirkung für den Insassenkopf aus. Dabei ist das Verbindungsteil besonders einfach und kostengünstig innerhalb des Bezuges erzeugbar. Aufgrund der hohen mechanischen Stabilität ist es weiterhin möglich, dass die Kopfstütze gegenüber aus dem Stand der Technik bekannten Kopfstützen mit einer geringeren Dicke und somit mit zusätzlich verringerter Masse erzeugbar ist. Die Ausbildung des ersten Schaummaterials in einem "Am-Ort-Schäumungsverfahren" bzw. "Pour-in-place-Verfahren" ermöglicht eine besonders schnelle, in wenigen Arbeitsschritten und mit geringem Aufwand durchführbare Herstellung des Verbindungsteils. Durch Anpassung einer Anzahl der Schichten des Stützelements sind in einfacher Weise eine Anpassung der Eigenschaften des Stützelements durch Einstellung von dessen Dicke und somit eine Einstellung des mechanischen Widerstands realisierbar.

Gemäß einer möglichen Ausgestaltung ist in zumindest einem weiteren Bereich zwischen dem Verbindungsteil und dem Bezug an einer Innenseite des Bezuges zumindest ein Schaumformelement, welches aus dem zweiten Schaummaterial gebildet ist, angeordnet. Somit ist es in besonders vorteilhafter Weise möglich, dass die Kopfstütze sich durch eine komplex geformte Außenform bei gleichzeitig weicher Haptik auszeichnet.

In einer weiteren möglichen Ausgestaltung umfasst das zumindest eine Schaumformelement das Stützelement. Bei dieser Ausführung zeichnet sich die Kopfstütze durch eine besonders geringe Anzahl an Einzelteilen aus und ist sehr einfach herstellbar.

In einer Weiterbildung der Erfindung ist das erste Schaummaterial ein fester oder halbfester Hart-Schaum, insbesondere ein Polyurethan-Hartschaum mit einer Druckfestigkeit von 0,1 MPa bis 0,5 MPa (insbesondere gemessen nach DIN EN 826 oder einem anderen vergleichbaren Verfahren mit einer Druckfestigkeit bei 10% Stauchung). Das zweite Schaummaterial ist beispielsweise ein weicherer Polyurethan-Schaum aus einem geeigneten Polyol-Material und Isocyanate-Material mit einer Stauchhärte von 1 kPa bis 15 kPa, insbesondere ein Polyurethan-Elastomerschaum oder ein Polyester- oder Polyether-Schaum. Alternativ kann das zweite Schaummaterial ein geeignetes zellulares Kunststoff-Material sein.

Aus dem Stand der Technik bekannte Kopfstützen, welche ein vorgefertigtes und anschließend umschäumtes Verbindungsteil umfassen, weisen dagegen eine höhere Masse, geringere mechanische Stabilität sowie daraus folgend eine geringere Rückhaltewirkung auf. Auch sind derartige Kopfstützen gegenüber der erfindungsgemäßen Lösung nur mit verhältnismäßig großem Aufwand herstellbar, da zum einen der Bezug zur Einführung des vorgefertigten Verbindungsteils eine diesem entsprechende Öffnung aufweisen muss und zum anderen eine Anordnung und Ausrichtung des Verbindungsteils innerhalb des Kopfstützenkörpers nur schwer realisierbar ist.

Durch die Erzeugung des Verbindungsteils innerhalb des Bezuges in einem Schäumungsverfahren werden diese Nachteile dagegen überwunden. Insbesondere kann das Verbindungsteil so groß wie innerhalb des Bezuges möglich ausgestaltet sein. Somit werden eine optimale Positionierung des Verbindungsteils und aufgrund der Verkleinerung der Größe der Öffnung ein verminderter Arbeits- und Kostenaufwand zum Verschluss dieser erreicht. Ein aus dem Stand der Technik bekannter Reißverschluss kann entfallen. Auch zeichnet sich das aus dem ersten Schaummaterial gebildete Verbindungsteil durch verbesserte Kraftabsorptionseigenschaften aus. Ferner ermöglicht das große Verbindungsteil eine einfache Geometrie der Kopfstützenhalterung und deren Stangen. Insbesondere können die Stangen der Kopfstützenhaltung kürzer und leichter ausgebildet sein.

Das erste Schaummaterial kann dabei zumindest teilweise in besonders vorteilhafter und die Ressourcen schonender Weise aus Recyclingmaterial gebildet werden.

Aufgrund der Bildung des Verbindungsteils aus dem ersten Schaummaterial mit der großen Härte, wie großer Stauchhärte und Eindruckhärte, wird einerseits eine besonders genaue, an den Bezug angepasste Formgebung und andererseits eine besonders gute Langzeit-Formstabilität des Kopfstützenkörpers erzielt, was insbesondere bei einer Ausbildung des Bezuges als Lederbezug besonders vorteilhaft ist.

Gemäß einer vorteilhaften Ausgestaltung ist an der Innenseite des Bezuges eine gegenüber dem ersten Schaummaterial dichte Beschichtung angeordnet, welche den Bezug der Kopfstütze gegen ein Austreten des ersten Schaummaterials bei dessen Erzeugung innerhalb des Bezuges abdichtet.

Um insbesondere im Fall einer Kollision des Fahrzeugs eine optimierte Stützwirkung für den Insassenkopf, ein optimiertes Eintauchen des Insassenkopfes in das Stützelement und eine verringerte, vom Stützelement weggerichtete Verlagerung des Insassenkopfes sicherzustellen, weisen die Schichten des Stützelements gemäß einer weiteren Ausgestaltung unterschiedliche Härten, insbesondere Stauchhärten und Eindruckhärten, auf. Insbesondere nehmen dabei die Stauchhärten und Eindruckhärten von der Innenseite des Bezuges in Richtung des Inneren des Kopfstützenkörpers zu.

Ferner weist das erste Schaummaterial insbesondere eine Dichte von 25 kg/m³ bis 50 kg/m³ auf, wodurch eine besonders geringe Masse des Verbindungsteils und somit der Kopfstütze erzielt wird.

In einem Verfahren zur Herstellung einer Kopfstütze für ein Fahrzeug mit einem Kopfstützenkörper, einer Kopfstützenhalterung und einem an einer Außenseite des Kopfstützenkörpers vorgesehenen Bezug wird innerhalb des Kopfstützenkörpers ein Verbindungsteil zur Verbindung der Kopfstützenhalterung mit dem Kopfstützenkörper angeordnet. Das Verbindungsteil wird aus einem in einem "Am-Ort-Schäumungsverfahren" bzw. "Pour-in-place-Verfahren" innerhalb des Bezuges erzeugten ersten Schaummaterial gebildet, wobei vor der Erzeugung des Verbindungsteils in einem zur Abstützung eines Insassenkopfes vorgesehenen Stützbereich zwischen dem Verbindungsteil und dem Bezug an einer Innenseite des Bezuges ein Stützelement, welches aus einem zweiten Schaummaterial gebildet wird, befestigt wird. Erfindungsgemäß wird das Stützelement aus mehreren im Wesentlichen parallel zueinander und zum Stützbereich verlaufenden Schichten gebildet. Gemäß einer Weiterbildung weist das erste Schaummaterial eine größere Härte, wie eine größere Stauchhärte und eine größere Eindruckhärte, als das zweite Schaummaterial auf.

Das erfindungsgemäße Verfahren ermöglicht es in besonders vorteilhafter Weise eine einfache und kostengünstige Herstellung der Kopfstütze, welche sich aufgrund der Ausbildung des Verbindungsteils als Schaumelement durch eine besonders geringe Masse bei gleichzeitig hoher mechanischer Stabilität und einer besonders guten Rückhaltewirkung für den Insassenkopf auszeichnet.

Die Vereinfachung und Verringerung der Kosten resultiert insbesondere aus der Erzeugung des Verbindungsteils in dem "Am-Ort-Schäumungsverfahren" bzw. "Pour-in-place-Verfahren" innerhalb des Bezuges. Hierbei wird auch eine optimale Positionierung des Verbindungsteils innerhalb des Kopfstützenkörpers erreicht.

Aufgrund der hohen mechanischen Stabilität ist es möglich, dass die Kopfstütze gegenüber aus dem Stand der Technik bekannten Kopfstützen mit einer geringeren Dicke und somit mit zusätzlich verringerter Masse erzeugt wird.

Dabei ist das erfindungsgemäße Verfahren in besonders vorteilhafter Weise mit bereits aus dem Stand der Technik bekannten Vorrichtungen zur Ausschäumung von Kopfstützenkörpern durchführbar, so dass keine oder zumindest nur geringe Investitionskosten zur Realisierung des erfindungsgemäßen Verfahrens erforderlich sind.

Aufgrund dessen, dass das Stützelement aus mehreren im Wesentlichen parallel zueinander und zum Stützbereich verlaufenden Schichten gebildet wird, kann durch Anpassung einer Anzahl der Schichten in einfacher Weise eine Anpassung der Eigenschaften des Stützelements durch Einstellung von dessen Dicke und somit eine Einstellung des mechanischen Widerstands realisiert werden.

In einer Weiterbildung des Verfahrens wird in zumindest einem weiteren Bereich zwischen dem Verbindungsteil und dem Bezug an einer Innenseite des Bezuges zumindest ein Schaumformelement, welches aus dem zweiten Schaummaterial gebildet ist, angeordnet. Somit ist es in besonders vorteilhafter und einfacher Weise möglich, die Kopfstütze derart herzustellen, dass sich diese durch eine komplex geformte Außenform bei gleichzeitig weicher Haptik auszeichnet.

Um den Bezug der Kopfstütze gegen ein Austreten des ersten Schaummaterials bei dessen Erzeugung innerhalb des Bezuges abzudichten, wird gemäß einer vorteilhaften Ausgestaltung an der Innenseite des Bezuges eine gegenüber dem ersten Schaummaterial dichte Beschichtung angeordnet.

Ausführungsbeispiele der Erfindung werden im Folgenden anhand von Zeichnungen näher erläutert.

Dabei zeigen:
- Figur 1: schematisch eine Schnittdarstellung eines ersten Ausführungsbeispiels einer Kopfstütze nach dem Stand der Technik,
- Figur 2: schematisch eine Schnittdarstellung eines zweiten Ausführungsbeispiels einer Kopfstütze nach dem Stand der Technik,
- Figur 3: schematisch eine perspektivische Teilschnittdarstellung der Kopfstütze nach dem Stand der Technik gemäß Figur 2,
- Figur 4: schematisch eine Schnittdarstellung eines dritten Ausführungsbeispiels einer Kopfstütze nach dem Stand der Technik,
- Figur 5: schematisch eine perspektivische Darstellung eines ersten Ausführungsbeispiels einer erfindungsgemäßen Kopfstütze,
- Figur 6: schematisch eine Schnittdarstellung eines zweiten Ausführungsbeispiels der erfindungsgemäßen Kopfstütze,
- Figur 7: schematisch eine Schnittdarstellung eines dritten Ausführungsbeispiels der erfindungsgemäßen Kopfstütze,
- Figur 8: schematisch eine perspektivische Darstellung eines Bezuges einer erfindungsgemäßen Kopfstütze
- Figur 9: schematisch eine Schnittdarstellung eines vierten Ausführungsbeispiels der erfindungsgemäßen Kopfstütze und
- Figur 10: schematisch eine Draufsicht auf eine Unterseite der Kopfstütze gemäß Figur 9.

Einander entsprechende Teile sind in allen Figuren mit den gleichen Bezugszeichen versehen.

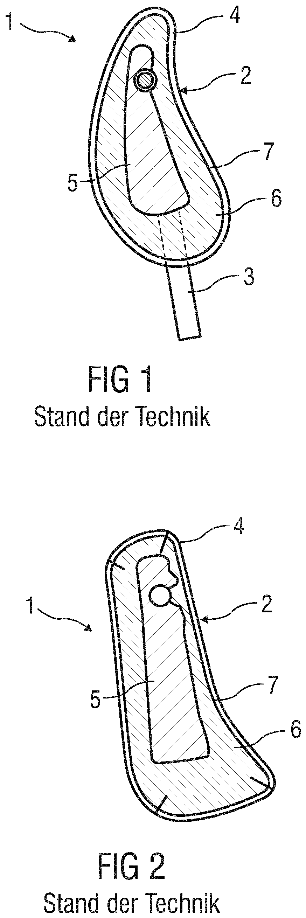

In den Figuren 1 bis 4 sind drei Ausführungsbeispiele einer Kopfstütze 1 nach dem Stand der Technik für ein nicht gezeigtes Fahrzeug in verschiedenen Ansichten dargestellt.

Die Kopfstütze 1 umfasst einen Kopfstützenkörper 2, eine aus einem metallischen Rundstab gebildete Kopfstützenhalterung 3 zur Befestigung der Kopfstütze 1 an einer Rückenlehne eines nicht gezeigten Fahrzeugsitzes. An seiner Außenseite des Kopfstützenkörpers 2 ist ein Bezug 4 vorgesehen, innerhalb dessen ein aus expandiertem Polypropylen oder anderem Kunststoff gebildetes Verbindungsteil 5 zur Verbindung der Kopfstützenhalterung 3 mit dem Kopfstützenkörper 2 angeordnet ist. Ein von dem Bezug 4 und dem Verbindungsteil 5 begrenzter Innenraum des Kopfstützenkörpers 2 ist von einem Schaumkörper 6 umgeben, welcher aus einem weichen Schaummaterial mit geringer Stauchhärte und geringer Eindruckhärte gebildet ist.

Zur Herstellung der Kopfstütze 1 wird das Verbindungsteil 5 gemeinsam mit der Kopfstützenhalterung 3 durch eine nicht näher dargestellte Öffnung des Bezuges 4 geführt und innerhalb desselben angeordnet und ausgerichtet. Anschließend wird die Öffnung auf geeignete Weise verschlossen und in einem so genannten "Am-Ort-Schäumungsverfahren" bzw. "Pour-in-place-Verfahren" wird der Innenraum mit einem im Wesentlichen flüssig ausgebildeten Schaummaterial ausgeschäumt, welches durch Aushärtung die Form des Kopfstützenkörpers 2 bildet und das Verbindungsteil 5 innerhalb des Kopfstützenkörpers 2 fixiert. Das im Wesentlichen flüssig eingebrachte Schaumstoffmaterial wird dabei nach 20 s hart.

Um den Bezug 4 gegen ein Austreten des flüssigen Schaummaterials abzudichten, weist dieser an seiner Innenseite eine gegenüber dem Schaummaterial dichte Beschichtung 7 auf.

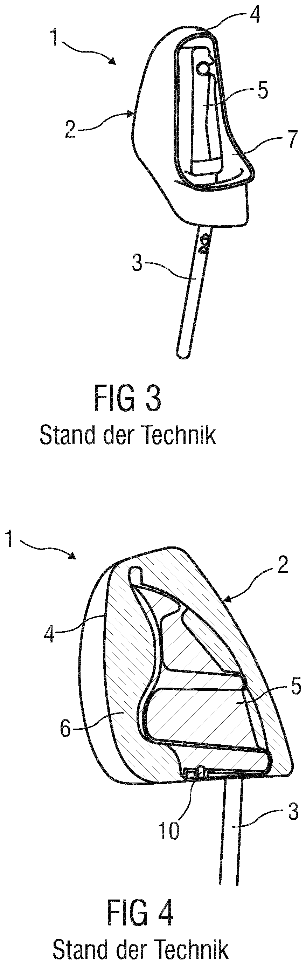

In dem in Figur 4 dargestellten dritten Ausführungsbeispiel der Kopfstütze nach dem Stand der Technik umfasst der Bezug 4 mehrere aus Kunststoff gebildete Halteelemente 10 zur Befestigung des Bezugs 4 am Verbindungselement 5.

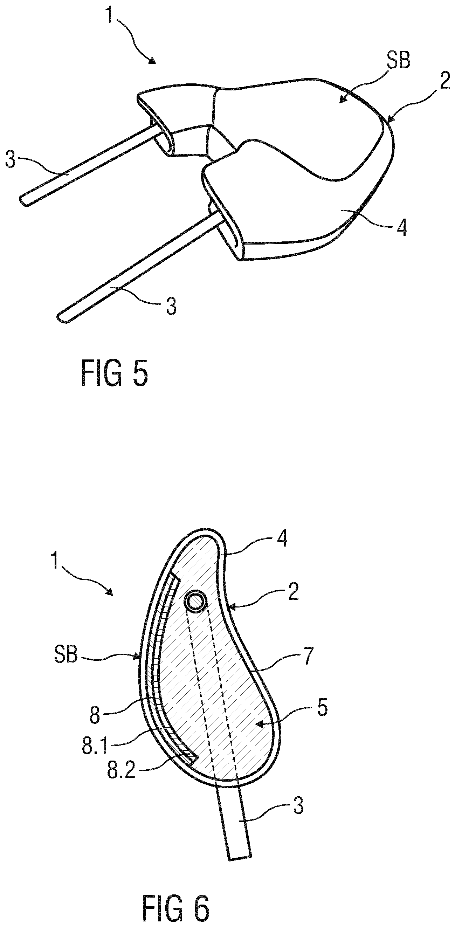

In den Figuren 5 bis 7 sind verschiedene Ausführungsbeispiele einer erfindungsgemäßen Kopfstütze 1 in unterschiedlichen Ansichten dargestellt.

Im Unterschied zu der in den Figuren 1 bis 4 dargestellten Kopfstütze 1 nach dem Stand der Technik ist das Verbindungsteil 5 aus einem innerhalb des Bezuges 4 erzeugten festen oder halbfesten ersten Schaummaterial gebildet, welches eine große Druckfestigkeit und/oder Härte, insbesondere eine große Stauchhärte und eine große Eindruckhärte, aufweist. Das erste Schaummaterial weist dabei maximal eine Dichte von 25 kg/m³ bis 50 kg/m³ auf und zeichnet sich dadurch durch eine besonders geringe Masse bei gleichzeitig hoher mechanischer Stabilität aus. Beispielsweise ist das erste Schaummaterial ein Polyurethan-Schaum, insbesondere ein Polyurethan-Hartschaum mit einer Druckfestigkeit von 0,1 MPa bis 0,5 MPa (insbesondere gemessen nach DIN EN 826 oder einem anderen vergleichbaren Verfahren mit einer Druckfestigkeit bei 10% Stauchung).

Weiterhin ist im Unterschied zu der in den Figuren 1 bis 4 dargestellten Kopfstütze 1 nach dem Stand der Technik in einem zur Abstützung eines Insassenkopfes vorgesehenen Stützbereich SB zwischen dem Verbindungsteil 5 und dem Bezug 4 an einer Innenseite des Bezuges 4 ein Stützelement 8 angeordnet. Dieses Stützelement 8 ist aus einem weichen zweiten Schaummaterial gebildet, welches eine geringere Druckfestigkeit und/oder Härte, wie eine geringere Stauchhärte und eine geringere Eindruckhärte, als das erste Schaummaterial aufweist. Das zweite Schaummaterial ist beispielsweise ein weicherer Polyurethan-Schaum aus einem geeigneten Polyol-Material und Isocyanate-Material mit einer Stauchhärte von 1 kPa bis 15 kPa, insbesondere ein Polyurethan-Elastomerschaum, oder ein Polyester- oder Polyether-Schaum. Alternativ kann das zweite Schaummaterial ein geeignetes zellulares Kunststoff-Material sein.

Dabei weist das Stützelement 8 gemäß der in Figur 6 dargestellten Ausführung zwei im Wesentlichen parallel zueinander und zum Stützbereich SB verlaufende Schichten 8.1, 8.2 auf, welche sich durch unterschiedliche Härten, wie Stauchhärten und Eindruckhärten, auszeichnen. Insbesondere weist dabei die erste Schicht 8.1 eine geringere Druckfestigkeit und/oder Härte, wie eine geringere Stauchhärte und Eindruckhärte, als die zweite Schicht 8.2 auf. Das heißt, die Stauchhärte und Eindruckhärte der Schichten 8.1, 8.2 nehmen von der Innenseite des Bezuges 4 in Richtung des Inneren des Kopfstützenkörpers 2 zu. Hierdurch wird einerseits eine für den Insassen komfortable Ablage seines Kopfes ermöglicht und andererseits im Fall einer Kollision des Fahrzeugs eine optimierte Stützwirkung, ein optimiertes Eintauchen des Insassenkopfes in das Stützelement und eine verringerte, vom Stützelement weggerichtete Verlagerung des Insassenkopfes sichergestellt. Bei einem solchen Aufprall des Insassenkopfes kann in besonders vorteilhafter Weise eine reale Absorption der auftretenden Kräfte aufgrund einer plastischen Verformung der Struktur des aus dem nicht oder nur sehr wenig mechanisch flexiblen ersten Schaummaterial gebildeten Verbindungsteils 5 erzielt werden.

Zur Herstellung der erfindungsgemäßen Kopfstütze 1 wird zunächst das Stützelement 8 an der Innenseite des Bezuges 4 angeordnet, insbesondere befestigt. Die Befestigung erfolgt dabei kraft-, stoff- und/oder formschlüssig, insbesondere durch Verkleben, Vernähen und/oder durch eine Klettverbindung mit der Innenseite des Bezuges 4.

Anschließend wird die Kopfstützenhalterung 3, insbesondere zwei Stangen, innerhalb des Bezuges 4 angeordnet und ausgerichtet bevor in einem "Am-Ort-Schäumungsverfahren" bzw. "Pour-in-place-Verfahren" der Innenraum mit dem im Wesentlichen flüssig ausgebildeten ersten Schaummaterial vollständig ausgeschäumt wird. Das erste Schaummaterial bildet durch Aushärtung das Verbindungsteil 5 und im Wesentlichen die Form des Kopfstützenkörpers 2. In einem alternativen Ausführungsbeispiel erfolgt die Ausschäumung des Bezuges 4 vor der Anordnung der Kopfstützenhalterung 3. Hierzu werden vorzugsweise vor der Ausschäumung mit der Kopfstützenhalterung 3 korrespondierende Platzhalter innerhalb des Bezuges 4 angeordnet.

Um den Bezug 4 gegen ein Austreten des flüssigen ersten Schaummaterials abzudichten, weist dieser an seiner Innenseite eine gegenüber dem Schaummaterial dichte Beschichtung 7 auf.

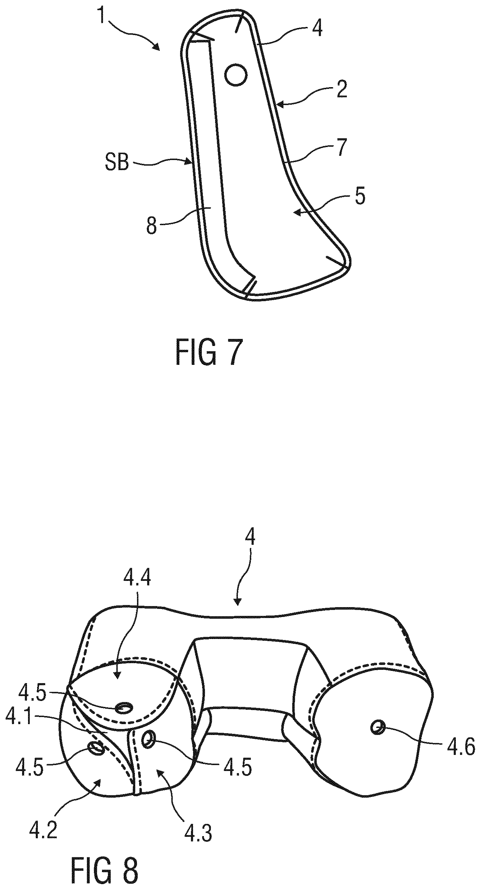

Figur 8 zeigt ein mögliches Ausführungsbeispiel des Bezuges 4 für die erfindungsgemäße Kopfstütze 1.

Dabei weist der Bezug 4 eine erste Öffnung 4.1 auf, welche zum Wenden der Außenseite des Bezuges 4 nach außen nach dem Aufbringen der Beschichtung 7 und des Stützelements 8 auf die Innenseite vorgesehen ist. Die Öffnung 4.1 wird nach dem Wenden durch eine kraft-, stoff- und/oder formschlüssige Verbindung, insbesondere durch Verkleben, Vernähen und/oder durch eine Klettverbindung von drei sich zumindest teilweise überlappenden Abschnitten 4.2 bis 4.4 des Bezuges 4 verschlossen.

Weiterhin weist der Bezug 4 zwei Öffnungen 4.5, 4.6 zur Durchführung der Kopfstützenhalterung 3 auf. Zur Realisierung der Öffnung 4.5 weist jeder der Abschnitte 4.2 bis 4.4 jeweils eine Öffnung 4.5 auf, wobei diese Öffnungen 4.5 versatzlos übereinander angeordnet werden. Die Öffnungen 4.5, 4.6 werden zum Einbringen des ersten Schaummaterials bei der Ausschäumung verwendet.

Alternativ wird das erste Schaummaterial durch die Öffnung 4.1 vor deren Verschluss in das Innere des Bezuges 4 eingebracht.

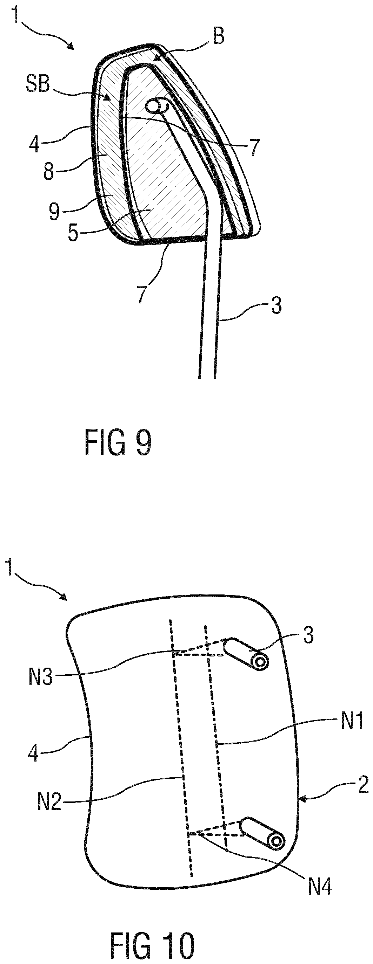

In Figur 9 ist eine Schnittdarstellung eines vierten Ausführungsbeispiels der erfindungsgemäßen Kopfstütze 1 dargestellt.

Im Unterschied zu den in den Figuren 5 bis 7 dargestellten Ausführungsbeispielen ist in zumindest einem weiteren Bereich B, das Verbindungsteil 5 vollständig umgebend, zwischen diesem und dem Bezug 4 an einer Innenseite des Bezuges 4 zumindest ein aus dem zweiten Schaummaterial gebildetes Schaumformelement 9 angeordnet. Das Schaumformelement 9 umfasst dabei im Stützbereich SB der Kopfstütze 1 das Stützelement 8. Das heißt, das Stützelement 8 und das Schaumformelement 9 bilden ein homogenes Formteil.

Zur Herstellung der Kopfstütze 1 beim dargestellten Ausführungsbeispiel wird das Schaumformelement 9 innerhalb des Bezuges 4 angeordnet. Anschließend wird die im dargestellten Ausführungsbeispiel u-förmig ausgebildete Kopfstützenhalterung 3 angeordnet und ausgerichtet, bevor in einem "Am-Ort-Schäumungsverfahren" bzw. "Pour-in-place-Verfahren", d. h. in-situ, der Innenraum des Schaumformelement 9 mit dem im Wesentlichen flüssig ausgebildeten ersten Schaummaterial vollständig ausgeschäumt wird. Das erste Schaummaterial bildet durch Aushärtung das Verbindungsteil 5, welches die Form des Innenraumes des Schaumformelements 9 aufweist.

In einem alternativen Ausführungsbeispiel erfolgt die Ausschäumung des Schaumformelements 9 vor der Anordnung der Kopfstützenhalterung 3. Hierzu werden vorzugsweise vor der Ausschäumung mit der Kopfstützenhalterung 3 korrespondierende Platzhalter innerhalb des Bezuges 4 angeordnet.

Um das Schaumformelement 9 gegen ein Austreten des flüssigen Schaummaterials abzudichten, weist dieses an seiner Innenseite eine gegenüber dem ersten Schaummaterial dichte Beschichtung 7 auf. Diese Beschichtung 7 weist ebenfalls der Bezug 4 im Bereich des Innenraums des Schaumformelements 9 auf.

Figur 10 zeigt in einer Draufsicht eine Unterseite der Kopfstütze 1 gemäß Figur 9.

Mit dieser Darstellung werden die Vorteile gegenüber den aus dem Stand der Technik bekannten Kopfstützen verdeutlicht.

Insbesondere ist an der Unterseite kein Schaummaterial sichtbar, da der Bezug 4 vollständig verschließbar ist. Weiterhin ist der Bezug 4 aufgrund seines vollständigen Verschlusses sehr einfach ausgebildet. Insbesondere sind aufgrund der Erzeugung des Verbindungsteils 5 in dem "Am-Ort-Schäumungsverfahren" bzw. "Pour-in-place-Verfahren", d. h. in-situ innerhalb des Bezuges 4 keine Halteelemente 10 erforderlich. Auch ist der Verschluss des Bezuges 4 aufgrund der nach dem Verschluss durchgeführten Erzeugung des Verbindungsteils 5 innerhalb desselben und somit aufgrund des Entfalls eines nachträglichen Einführens des Verbindungsteils 5 in den Bezug 4 ein Verschluss des Bezuges 4 mit nur einer Naht N1 möglich, wohingegen nach dem Stand der Technik mehrere Nähte N2 bis N4 erforderlich sind. Ausgenommen der Unterseite kann der gesamte Bezug 4 geschlossen ausgebildet sein.

Weiterhin wird durch die genau an den Bezug 4 angepasste Formgebung eine besonders gute Langzeit-Formstabilität des Kopfstützenkörpers 2 erzielt, was insbesondere bei einer Ausbildung des Bezuges 4 als Lederbezug besonders vorteilhaft ist.

Weiterhin kann aufgrund der Materialwahl und der Ausbildung des Verbindungsteils 5 aus dem ersten Schaummaterial in dem "Am-Ort-Schäumungsverfahren" bzw. "Pour-in-place-Verfahren" ein besonders geringes Gewicht der Kopfstütze erzielt werden.

Beim dargestellten vierten Ausführungsbeispiel ist insbesondere die Anordnung und Ausrichtung des Stützelements 8 sehr einfach, da dieses ein Formteil mit dem Schaumformelement 9 bildet.

Weiterhin ist gegenüber dem Stand der Technik bei der Herstellung eine Abfallmenge stark reduziert, insbesondere aufgrund dessen, dass der Bezug im Wesentlichen faltenfrei ausgebildet werden kann und schon vor der Erzeugung des Verbindungsteils 5 größtenteils verschlossen ist. Hierdurch wird weiterhin eine Kostenreduktion erzielt.

Weiterhin werden auch Abdrücke an den Bauteilen der Kopfstütze 1 vermieden, welche beispielsweise beim Einführen des Verbindungsteils 5 nach dem Stand der Technik auftreten können.

### Bezugszeichenliste

- 1: Kopfstütze
- 2: Kopfstützen körper
- 3: Kopfstützenhalterung
- 4: Bezug
- 4.1: Öffnung
- 4.2: Abschnitt
- 4.3: Abschnitt
- 4.4: Abschnitt
- 4.5: Öffnung
- 4.6: Öffnung
- 5: Verbindungsteil
- 6: Schaumkörper
- 7: Beschichtung
- 8: Stützelement
- 8.1: Schicht
- 8.2: Schicht
- 9: Schaumformelement
- 10: Halteelement
- B: Bereich
- SB: Stützbereich
- N1: Naht
- N2: Naht
- N3: Naht
- N4: Naht

## Patentansprüche

1. Kopfstütze (1) für ein Fahrzeug mit einem Kopfstützenkörper (2), einer Kopfstützenhalterung (3) und einem an einer Außenseite des Kopfstützenkörpers (2) vorgesehenen Bezug (4), wobei innerhalb des Kopfstützenkörpers (2) ein Verbindungsteil (5) zur Verbindung der Kopfstützenhalterung (3) mit dem Kopfstützenkörper (2) vorgesehen ist, wobei das Verbindungsteil (5) aus einem innerhalb des Bezuges (4) in einem "Am-Ort-Schäumungsverfahren" bzw. "Pour-in-place-Verfahren" erzeugten ersten Schaummaterial gebildet ist, wobei in einem zur Abstützung eines Insassenkopfes vorgesehenen Stützbereich (SB) zwischen dem Verbindungsteil (5) und dem Bezug (4) an einer Innenseite des Bezuges (4) ein Stützelement (8), welches aus einem zweiten Schaummaterial gebildet ist, angeordnet ist,
**dadurch gekennzeichnet, dass** das Stützelement (8) mehrere im Wesentlichen parallel zueinander und zum Stützbereich (SB) verlaufende Schichten (8.1, 8.2) aufweist.

2. Kopfstütze nach Anspruch 1,
**dadurch gekennzeichnet, dass** in zumindest einem weiteren Bereich (B) zwischen dem Verbindungsteil (5) und dem Bezug (4) an einer Innenseite des Bezuges (4) zumindest ein Schaumformelement (9), welches aus dem zweiten Schaummaterial gebildet ist, angeordnet ist.

3. Kopfstütze nach Anspruch 2,
**dadurch gekennzeichnet, dass** das zumindest eine Schaumformelement (9) das Stützelement (8) umfasst.

4. Kopfstütze (1) nach einem der vorhergehenden Ansprüche,
**dadurch gekennzeichnet, dass** das erste Schaummaterial eine größere Druckfestigkeit und/oder eine größere Härte, insbesondere eine größere Stauchhärte und eine größere Eindruckhärte, als das zweite Schaummaterial aufweist.

5. Kopfstütze (1) nach einem der vorhergehenden Ansprüche,
**dadurch gekennzeichnet, dass** an der Innenseite des Bezuges (4) eine gegenüber dem ersten Schaummaterial dichte Beschichtung (7) angeordnet ist.

6. Kopfstütze (1) nach einem der vorhergehenden Ansprüche,
**dadurch gekennzeichnet, dass** die Schichten (8.1, 8.2) unterschiedliche Stauchhärten und Eindruckhärten aufweisen.

7. Kopfstütze (1) nach einem der vorhergehenden Ansprüche,
**dadurch gekennzeichnet, dass** das erste Schaummaterial eine Dichte von 25 kg/m³ bis 50 kg/m³ aufweist.

8. Verfahren zur Herstellung einer Kopfstütze (1) für ein Fahrzeug mit einem Kopfstützenkörper (2), einer Kopfstützenhalterung (3) und einem an einer Außenseite des Kopfstützenkörpers (2) vorgesehenen Bezug (4), wobei innerhalb des Kopfstützenkörpers (2) ein Verbindungsteil (5) zur Verbindung der Kopfstützenhalterung (3) mit dem Kopfstützenkörper (2) angeordnet wird, wobei das Verbindungsteil (5) aus einem in einem "Am-Ort-Schäumungsverfahren" bzw. "Pour-in-place-Verfahren" innerhalb des Bezuges (4) erzeugten ersten Schaummaterial gebildet ist, wobei vor der Erzeugung des Verbindungsteils (5) in einem zur Abstützung eines Insassenkopfes vorgesehenen Stützbereich (SB) zwischen dem Verbindungsteil (5) und dem Bezug (4) an einer Innenseite des Bezuges (4) ein Stützelement (8), welches aus einem zweiten Schaummaterial gebildet wird, angeordnet wird,
**dadurch gekennzeichnet, dass** das Stützelement (8) aus mehreren im Wesentlichen parallel zueinander und zum Stützbereich (SB) verlaufenden Schichten (8.1, 8.2) gebildet wird.

9. Verfahren nach Anspruch 8,
**dadurch gekennzeichnet, dass** in zumindest einem weiteren Bereich (B) zwischen dem Verbindungsteil (5) und dem Bezug (4) an einer Innenseite des Bezuges (4) zumindest ein Schaumformelement (9), welches aus dem zweiten Schaummaterial gebildet ist, angeordnet wird.

10. Verfahren nach Anspruch 8 oder 9,
**dadurch gekennzeichnet, dass** an der Innenseite des Bezuges (4) eine gegenüber dem ersten Schaummaterial dichte Beschichtung (7) angeordnet wird.

## Claims

1. Headrest (1) for a vehicle, having a headrest body (2), a headrest holder (3) and a cover (4) provided on an outer side of the headrest body (2), wherein a connecting part (5) for connecting the headrest holder (3) to the headrest body (2) is provided within the headrest body (2), wherein the connecting part (5) is formed from a first foam material produced within the cover (4) by an "in-situ foaming method" or "pour-in-place method", wherein a supporting element (8), which is formed from a second foam material, is arranged on an inner side of the cover (4) in a supporting region (SB), intended to support a passenger's head, between the connecting part (5) and the cover (4),
**characterized in that** the supporting element (8) has a plurality of layers (8.1, 8.2) that extend substantially parallel to one another and to the supporting region (SB).

2. Headrest according to Claim 1,
**characterized in that** at least one molded foam element (9), which is formed from the second foam material, is arranged on an inner side of the cover (4) in at least one further region (B) between the connecting part (5) and the cover (4).

3. Headrest according to Claim 2,
**characterized in that** the at least one molded foam element (9) comprises the supporting element (8).

4. Headrest (1) according to one of the preceding claims,
**characterized in that** the first foam material has higher compressive strength and/or higher hardness, in particular higher compressive hardness and higher indentation hardness, than the second foam material.

5. Headrest (1) according to one of the preceding claims, **characterized in that** a coating (7) which is impermeable with respect to the first foam material is arranged on the inner side of the cover (4).

6. Headrest (1) according to one of the preceding claims,
**characterized in that** the layers (8.1, 8.2) have different compressive hardnesses and indentation hardnesses.

7. Headrest (1) according to one of the preceding claims,
**characterized in that** the first foam material has a density of 25 kg/m³ to 50 kg/m³.

8. Method for producing a headrest (1) for a vehicle, having a headrest body (2), a headrest holder (3) and a cover (4) provided on an outer side of the headrest body (2), wherein a connecting part (5) for connecting the headrest holder (3) to the headrest body (2) is arranged within the headrest body (2), wherein the connecting part (5) is formed from a first foam material produced by an "in-situ foaming method" or "pour-in-place method" within the cover (4), wherein, before the connecting part (5) is created, a supporting element (8), which is formed from a second foam material, is arranged on an inner side of the cover (4) in a supporting region (SB), intended to support a passenger's head, between the connecting part (5) and the cover (4),
**characterized in that** the supporting element (8) is formed from a plurality of layers (8.1, 8.2) that extend substantially parallel to one another and to the supporting region (SB).

9. Method according to Claim 8,
**characterized in that** at least one molded foam element (9), which is formed from the second foam material, is arranged on an inner side of the cover (4) in at least one further region (B) between the connecting part (5) and the cover (4).

10. Method according to Claim 8 or 9,
**characterized in that** a coating (7) which is impermeable with respect to the first foam material is arranged on the inner side of the cover (4).

## Revendications

1. Appuie-tête (1) de véhicule avec un corps d'appuie-tête (2), un support d'appuie-tête (3) et une taie (4) prévue au niveau d'un côté extérieur du corps d'appuie-tête (2), une partie de liaison (5) étant prévue à l'intérieur du corps d'appuie-tête (2) pour relier le support d'appuie-tête (3) au corps d'appuie-tête (2), la partie de liaison (5) étant formée à partir d'un premier matériau en mousse produit à l'intérieur de la taie (4) au cours d'un procédé « de moussage sur place » ou procédé « coulé sur place » (en anglais pour-in-place), sachant qu'un élément d'appui (8) formé à partir d'un deuxième matériau en mousse est disposé dans une zone d'appui (SB) prévue pour le maintien de la tête d'un passager entre la partie de liaison (5) et la taie (4), au niveau d'un côté intérieur de la taie (4) ;
**caractérisé en ce que** l'élément d'appui (8) comporte plusieurs couches (8.1, 8.2) s'étendant pour l'essentiel parallèlement l'une par rapport à l'autre et par rapport à la zone d'appui (SB).

2. Appuie-tête selon la revendication 1, **caractérisé en ce qu'**au moins un élément de moulage de mousse (9) formé à partir du deuxième matériau en mousse est disposé dans au moins une région supplémentaire (B) entre la partie de liaison (5) et la taie (4) au niveau d'un côté intérieur de la taie (4).

3. Appuie-tête selon la revendication 2, **caractérisé en ce que** l'au moins un élément de moulage de mousse (9) comprend l'élément d'appui (8).

4. Appuie-tête (1) selon l'une quelconque des revendications précédentes, **caractérisé en ce que** le premier matériau en mousse présente une résistance à la pression plus importante et/ou une dureté plus importante, notamment une dureté d'enfoncement plus importante et une dureté de compactage plus importante que le deuxième matériau en mousse.

5. Appuie-tête (1) selon l'une quelconque des revendications précédentes, **caractérisé en ce qu'**un revêtement (7) étanche par rapport au premier matériau en mousse est disposé au niveau du côté intérieur de la taie (4).

6. Appuie-tête (1) selon l'une quelconque des revendications précédentes, **caractérisé en ce que** les couches (8.1, 8.2) présentent différentes duretés d'enfoncement et duretés de compactage.

7. Appuie-tête (1) selon l'une quelconque des revendications précédentes, **caractérisé en ce que** le premier matériau en mousse présente une densité de 25 kg/m³ à 50 kg/m³.

8. Procédé de production d'un appuie-tête (1) de véhicule automobile avec un corps d'appuie-tête (2), un support d'appuie-tête (3) et une taie (4) prévue au niveau d'un côté extérieur du corps d'appuie-tête (2), une partie de liaison (5) étant disposée à l'intérieur du corps d'appuie-tête (2) pour relier le support d'appuie-tête (3) au corps d'appuie-tête (2), la partie de liaison (5) étant formée à partir d'un premier matériau en mousse produit à l'intérieur de la taie (4) au cours d'un procédé « de moussage sur place » ou procédé « coulé sur place » (en anglais pour-in-place), sachant qu'avant la production de la partie de liaison (5), un élément d'appui (8) formé à partir d'un deuxième matériau en mousse est disposé dans une zone d'appui (SB) prévue pour le maintien de la tête d'un passager entre la partie de liaison (5) et la taie (4), au niveau d'un côté intérieur de la taie (4) ; **caractérisé en ce que** l'élément d'appui (8) comporte plusieurs couches (8.1, 8.2) s'étendant pour l'essentiel parallèlement l'une par rapport à l'autre et par rapport à la zone d'appui (SB).

9. Procédé selon la revendication 8, **caractérisé en ce qu'**au moins un élément de moulage de mousse (9) formé à partir du deuxième matériau en mousse est disposé dans au moins une région supplémentaire (B) entre la partie de liaison (5) et la taie (4), au niveau d'un côté intérieur de la taie (4).

10. Procédé selon la revendication 8 ou 9, **caractérisé en ce qu'**un revêtement (7) compact par rapport au premier matériau en mousse est disposé au niveau du côté intérieur de la taie (4).
